(19) Europäisches Patentamt
European Patent Office
Office européen des brevets

(11) **EP 2 837 961 B1**

(12) **EUROPÄISCHE PATENTSCHRIFT**

(45) Veröffentlichungstag und Bekanntmachung des Hinweises auf die Patenterteilung:
**10.03.2021 Patentblatt 2021/10**

(51) Int Cl.:
*G02B 21/36* *(2006.01)*    *G06T 5/00* *(2006.01)*
*H04N 17/00* *(2006.01)*    *G06T 7/80* *(2017.01)*

(21) Anmeldenummer: **14178679.8**

(22) Anmeldetag: **28.07.2014**

(54) **Verfahren zur Kalibrierung eines digitalen optischen Abbildungssystems, Verfahren zur Korrektur von Abbildungsfehlern in einem digitalen optischen Abbildungssystem, sowie digitales optisches Abbildungssystem**

Method for calibrating a digital optical imaging system, method for the correction of imaging defects in a digital optical imaging system, and digital optical imaging system

Procédé de calibrage d'un système de représentation optique numérique, procédé de correction d'erreur de représentation dans un système de représentation optique numérique, et système de représentation optique numérique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2013 DE 102013012988**

(43) Veröffentlichungstag der Anmeldung:
**18.02.2015 Patentblatt 2015/08**

(73) Patentinhaber: **Carl Zeiss Microscopy GmbH**
**07745 Jena (DE)**

(72) Erfinder:
• **Winterot, Johannes**
**07745 Jena (DE)**
• **Milde, Thomas**
**07616 Nausnitz (DE)**
• **Funck, Max**
**99423 Weimar (DE)**
• **Jabbour, Toufic**
**73431 Aalen (DE)**

(74) Vertreter: **Müller, Silke**
**Carl Zeiss AG**
**Patentabteilung**
**Carl-Zeiss-Promenade 10**
**07745 Jena (DE)**

(56) Entgegenhaltungen:
JP-A- H06 165 024      US-A1- 2002 041 383
US-A1- 2004 218 071    US-A1- 2009 268 078

• YAMASHITA T ET AL: "A lateral chromatic aberration correction system for ultrahigh-definition color video camera", PROCEEDINGS OF SPIE, S P I E - INTERNATIONAL SOCIETY FOR OPTICAL ENGINEERING, US, Bd. 6068, 1. Januar 2006 (2006-01-01), Seiten 60680N-1, XP002550035, ISSN: 0277-786X, DOI: 10.1117/12.642969

EP 2 837 961 B1

**Beschreibung**

Die Erfindung betrifft ein Verfahren zur Kalibrierung eines digitalen optischen Abbildungssystems, ein Verfahren zur Korrektur von Abbildungsfehlern, die durch verschiedene Optiken entstehen, insbesondere für digitale optische Abbildungssysteme, die ein Zoomsystem aufweisen. Daneben betrifft die Erfindung ein digitales optisches Abbildungssystem, in dem solche Verfahren implementiert sind.

Das digitale optisches Abbildungssystem ist vorzugsweise ein Digitalmikroskop mit einem Zoomsystem und einem ggf. auswechselbaren Objektiv. Das Abbildungssystem kann aber auch ein telezentrisches oder anderes Zoomsystem ohne Objektiv sein, wie es beispielsweise für verschiedene Messtechnik-Aufgaben Verwendung findet.

Nachfolgend wird in der Beschreibung von einem Digitalmikroskop ausgegangen, was aber keine Einschränkung auf diese Anwendung bedeutet.

Von Abbildungsfehlern spricht man dann, wenn die verschiedenen Lichtstrahlen, die von dem Objektpunkt ausgehen, nicht alle in einem Bildpunkt fokussiert werden. Die wichtigsten Abbildungsfehler sind die sphärische und die chromatische Aberration. Sphärische und chromatische Abbildungsfehler werden durch Systeme aus mehreren Linsen verschiedener Glassorten, sphärische Abbildungsfehler durch asphärische Linsen oder Gradientenlinsen korrigiert. Eine Glasplatte (Planplatte) erzeugt einen Bildebenenversatz bzw. eine Unschärfe, die mit größer werdendem Öffnungswinkel zunimmt.

Die Abbildung durch Linsen ist immer mehr oder weniger fehlerbehaftet. Mit zunehmender Linsenzahl ist die Korrektion verbesserbar. Die Kosten für Optik und Fassungen steigen. Es entstehen beispielsweise Farbsäume oder die sogenannte Bildfeldwölbung im mikroskopischen Bild. Durch einen geschickten Aufbau der Objektive lassen sich solche Abbildungsfehler weitgehend ausschließen. Planachromate, Apochromate sind Beispiele hierfür. Bei apochromatischen Objektiven werden Farbsäume in der mikroskopischen Abbildung durch eine aufwendige Anordnung unterschiedlicher Linsen im Objektiv unterdrückt. Die Planachromaten sind so korrigiert, dass die normalerweise im mikroskopischen Bild auftretende Bildfeldwölbung eliminiert wird.

Die Planapochromaten besitzen von allen Objektiven die aufwendigste Konstruktion. Bei diesen Objektiven ist die Bildfeldwölbung, wie bei den Planachromaten, weitgehend beseitigt. Zusätzlich werden bei diesen Objektiven die normalerweise auftretenden roten und blauen Farbsäume durch die sehr aufwendige Konstruktion unterbunden. Diese Objektive sind sehr teuer und finden ihren Einsatz in erster Linie in der Farb-Mikrofotografie bei höchsten Ansprüchen.

Bei Zoomsystemen kommen Abbildungsfehler durch Zentrierdifferenzen der Zoomkonstruktion hinzu (Bildstandfehler).

Aus der DE 102 25 193 A1 ist ein Verfahren zur Kalibrierung der Vergrößerung eines Stereomikroskops bekannt, bei dem auf der Grundlage einer Erstkalibrierung eine Kalibrierung über den gesamten Vergrößerungsbereich ableitbar sein soll. Anhand eines Objektiv-Okular-Referenzmaßpaares werden durch die Betätigung des Zooms am Mikroskop vorgegebene Ist-Vergrößerungen eingestellt. Die hierbei vorliegende Stellung der einzelnen Linsen des Zooms werden erfasst und für jede Zoomstellung wird ein Nominal-Vergrößerungswert abgespeichert. Durch rechnerischen Vergleich der Ist-Vergrößerung mit der Nominal-Vergrößerung wird ein Korrekturfaktor berechnet, welcher zur Kalibrierun des gesamten Zoom-Bereichs benutzt wird.

In der Digitalfotografie können Objektivverzeichnungen beispielsweise mittels Software manuell korrigiert werden, wobei umfangreiche Datenbanken für Kameras und Objektive vorhanden sein müssen. Teilweise werden Objektivkorrekturen (Verzerrungen, chromatische Aberrationen und Vignettierungen) mit der Firmware der Kameras intern durchgeführt (z.B. Sony).

Die DE 101 14 757 B4 beschreibt ein Mikroskopsystem mit einer Zoomoptik und einer Digitalkamera. In einer Korrektureinheit (PC) wird das digital fotografierte Bild in Übereinstimmung mit Bildkorrekturdaten entsprechend der jeweiligen Vergrößerung korrigiert. Dabei sind die Bildkorrekturdaten fotografische Bilddaten eines Standardhintergrundbildes. Es wird für jedes Bildelement eine exklusiv-ODER-Funktion entsprechend dem Objektbild und dem Standard-Hintergrundbild durchgeführt.

Aus der DE 10 2010 025 888 A1 ist eine Digitalkamera mit einem implementierten Verfahren zur Erstellung eines verzerrungsfreien Digitalbildes bekannt, das eine an das jeweils vorhandene Kameraobjektiv angepasste, optimale Bildentzerrung ermöglicht. Bei dem Verfahren werden Korrekturwerte für jeden Typ eines Kameraobjektives experimentell einmalig bestimmt und anschließend in allen Digitalkameras mit gleichem Objektivtyp hinterlegt. Die Verzeichnungsfunktion ist dabei abhängig von der eingestellten Brennweite und der Entfernung eines aufzunehmenden Objektes und kann als zweidimensionale Matrix aus Konstanten ermittelt und in der Digitalkamera abgelegt werden. Dabei können die Faktoren durch Interpolation aus der hinterlegten Matrix ermittelt werden.

Aus US 2008/0239107 A1 und US 2009/0268078 A1 sind Verzeichnungskorrekturverfahren für Digitalkameras bekannt, bei denen Koeffizienten in Abhängigkeit von Zoom- und Fokuseinstellungen in einer Tabelle hinterlegt sind. Bei der Korrektur werden Zwischenwerte durch Interpolation mit Polynomen höherer Ordnung ermittelt.

Yamashita beschreibt in "A Lateral Chromatic Abberation Correction System for Ultrahigh-definition Color Video Camera" eine Farbkamera für ein ultrahigh-Definition Video-System mit einer Farbversatz-Korrektur. Ein einfarbiges Muster wird aufgenommen und jeweils gemeinsam mit der zugehörigen Fokuslänge in einem PC gespeichert. Dann werden die Korrespondezpunkte zwischen dem grünen Kanal und dem jeweils anderen Kanal (Blau oder Rot) durch Mustererkennung ermittelt und Abstandsvektoren (Rot-Grün und Blau-Grün) als Korrekturvektoren ermittelt.

In der US 2004/0218071 A1 ist ein Verfahren zur Farbfehlerkorrektur von Farbbildern verschiedener Abbildungssysteme beschrieben. Mittels Bildverarbeitungsalgorithmen werden in einem ersten Schritt die geometrischen Fehler aller Farbkanäle korrigiert und in einem zweiten Schritt werden die Farbkanäle wieder kombiniert. Aufgrund verschiedener Bildverarbeitungsschritte ist das Verfahren zeitaufwändig.

In der Digitalmikroskopie sind zumeist Objektiv und Zoomsystem untereinander konfigurierbar. Das heißt, ein Zoomsystem kann mit unterschiedlichen Objektiven verwendet werden. Da sowohl Zoomsystem, als auch Objektiv unterschiedliche Abbildungsfehler verursachen, sind verschiedene Korrekturen erforderlich, um zu einer zufriedenstellenden Bildqualität zu gelangen.

Der Erfindung liegt die Aufgabe zugrunde, ein Verfahren zur Kalibrierung eines digitalen optischen Abbildungssystems anzugeben, das eine Korrektur von Abbildungsfehlern während des Betriebes ermöglicht. Eine weitere Aufgabe ist die Angabe eines Verfahrens zur Korrektur von Abbildungsfehlern in einem digitalen optischen Abbildungssystem und die Schaffung eines solchen digitalen optischen Abbildungssystems, welches ein motorisiertes oder kodiertes Zoomsystem und ggf. ein Objektiv umfasst, wobei eine Bildkorrektur bei allen Zoomstellungen mit großer Genauigkeit und Zuverlässigkeit erfolgen soll.

Die Aufgabe wird erfindungsgemäß durch Verfahren mit den Merkmalen der unabhängigen Verfahrensansprüche 1 und 6, sowie mit einem digitalen optischen Abbildungssystem mit den Merkmalen des Anspruch 12 gelöst.

Vorteilhafte Ausgestaltungen sind in den Unteransprüchen angegeben.

Ein digitales optisches Abbildungssystem umfasst zumindest ein Zoomsystem, einen Bildsensor und eine Logikeinheit zur digitalen Bildverarbeitung. Das Abbildungssystem kann beispielsweise ein telezentrisches oder anderes Zoomsystem ohne Objektiv oder auch ein Digitalmikroskop sein

Das Digitalmikroskop umfasst zumindest ein Objektiv, ein motorisiertes Zoomsystem, den Bildsensor und die Logikeinheit zur Bildverarbeitung. Die Logikeinheit ist vorzugsweise gemeinsam mit dem Zoomsystem in einer so genannten Optical Engine angeordnet, wo auch eine Motorsteuerung für das Zoomsystem und weitere Steuer- und Auswertekomponenten untergebracht sind. An der Optical Engine ist das Objektiv vorzugsweise wechselbar angeordnet. Das Objektiv besitzt vorteilhafterweise einen eigenen Datenspeicher und eine elektronische Schnittstelle, über die dieser Datenspeicher ausgelesen werden kann.

Selbstverständlich umfasst das Digitalmikroskop in an sich bekannter Weise auch eine Steuereinheit zur Ansteuerung der Mikroskopkomponenten und eine Ein-/Ausgabeeinheit zur Bedienung, Bildbetrachtung und -auswertung. Dass Monitor, Tastatur und Bedienkomponenten als Ein-/Ausgabeeinheiten bei einem Digitalmikroskop auch als separate Komponenten vorhanden sein können, die an das Digitalmikroskop angeschlossen werden, versteht sich von selbst.

Ebenso verfügt das Digitalmikroskop vorzugsweise über einen motorisiert verfahrbaren Objekttisch, ein Schwenkstativ, eine Beleuchtungsvorrichtung für Auflichtbeleuchtung und ggf. für Durchlichtbeleuchtung und weitere hier nicht erwähnte Komponenten.

Diese Komponenten stehen aber nicht in unmittelbaren Zusammenhang mit der Erfindung, so dass auf eine ausführliche Beschreibung an dieser Stelle verzichtet wird.

Das Korrekturverfahren beruht auf der Zuordnung von Vergrößerung und Korrekturdaten an die Antriebssteuerung des Zooms ggf. in Verbindung mit dem zugehörigem Objektiv.

Ein abzubildendes Objekt soll bei Betätigung des Zoom um die Bildmitte proportional seine Größe ändern. In vorzugsweise der größten und kleinsten Vergrößerung wird ein Referezobjekt abgebildet. Aus der Änderung der Bildkoordinaten ist derjenige Bildpunkt bestimmbar, der diese "Mittelpunktseigenschaft" besitzt. Die Bilder bzw. Aufnahmen werden dann immer zu diesem Punkt ausgerichtet und das Bildfeld symmetrisch zu ihm ausgewertet.

Um ein erfindungsgemäßes Korrekturverfahren in einem Digitalmikroskop oder anderem Abbildungssystem anzuwenden, ist zunächst für jedes produzierte Digitalmikroskop oder Abbildungssystem ein Erstkalibrierungsprozess erforderlich, bei dem die tatsächlichen Optikdaten des Zoomsystems und ggf. des verwendeten Objektivs und die daraus resultierenden Abbildungsfehler ermittelt werden.

Für diesen Erstkalibrierungsprozess wird ein Referenzobjekt auf dem Objekttisch platziert, so dass es in bekannter Weise von einem Objektiv erfasst werden kann. Das Referenzobjekt weist ein Referenzmuster mit fest definierten Referenzpunkten auf. Die Referenzpunkte sind vorzugsweise äquidistant, also in definiert gleichen Abständen auf dem Referenzobjekt verteilt angeordnet. Vorzugsweise bilden die Referenzpunkte ein Array aus Zeilen und Spalten.

Eine besonders bevorzugte Ausführungsform des Referenzobjektes ist eine mit Chrom beschichtete Glasplatte, in der an den Referenzpunkten Löcher vorgesehen sind. Diese Glasplatte wird dann von der dem Objektiv abgewandten Seite beleuchtet, also im Durchlichtverfahren betrachtet.

Im nächsten Schritt wird eine beliebige erste Zoomstellung des Zoomsystems angesteuert, von der korrekte Vergrößerungsfaktor (Realzoomwert $\beta$) zunächst nicht bekannt ist. Vorzugsweise wird die kleinste oder größte mögliche Vergrößerung gewählt. In dieser ersten Zoomstellung wird ein Referenzbild im Bildsensor aufgenommen. Dabei wird das Referenzmuster des Referenzobjektes auf dem Bildsensor abgebildet.

Bei der Verwendung des besonders bevorzugten Referenzobjektes ist das Referenzbild also schwarz, die Referenzpunkte sind dann im Idealfall weiße Punkte.

Das Referenzbild wird zunächst in seine drei Farbkomponenten zerlegt und dabei drei Farbkanalreferenzbilder $R_{Rot}$, $R_{Grün}$, $R_{Blau}$ erzeugt und vorzugsweise in einem Zwischenspeicher abgelegt.

Im nächsten Schritt wird das Referenzbild zentriert. Dies geschieht durch Einpassen eines dem Referenzmuster entsprechenden Idealbildes in das Referenzbild. Dabei wird dieses so lange verschoben und ggf. gedreht, bis die geringste Abweichung zwischen beiden Bildern erzielt ist. Anschließend wird das Bildzentrum ermittelt. Dieses Zentrieren erfolgt vorzugsweise anhand des grünen Farbkanalreferenzbildes $R_{Grün}$, da Grün (bzw. der Grün-Anteil in Grautönen) im menschlichen Auge den größten Beitrag zur Helligkeitswahrnehmung, somit auch zur Kontrast- und Schärfe-Wahrnehmung, leistet.

Schließlich werden für jedes Farbkanalreferenzbild n Lagefehlervektoren für die Referenzpunkte ermittelt, indem die Lageabweichungen in Höhe und Breite vom Idealbild bestimmt werden. Es erfolgt eine Speicherung der Lagefehlervektoren in einer Referenztabelle.

Aufgrund der Kenntnis der realen Maße des Referenzmusters kann für jede Zoomstellung auf einfache Weise ein Realzoomwert β ermittelt und mit in der Referenztabelle gespeichert werden.

Anschließend werden die zuvor beschriebenen Schritte für mindestens zwei weitere Zoomstellungen wiederholt. Vorzugsweise werden die Lagefehlervektoren für sieben oder neun Zoomstellungen ermittelt, welche die kleinste und die größte Zoomstellung einschließen.

Aus der Referenztabelle wird ein Verzeichnungsmodell gebildet, indem aus den Lagefehlervektoren in den verschiedenen Zoomstellungen Polynome höherer Ordnung interpoliert und elf Lagefehlerkoeffizienten je Farbkanalreferenzbild ermittelt werden. Zusätzlich können Bildstandfehlerkoeffizienten ermittelt werden, sowie Zoommotorpositionen zu zugehörigen Vergrößerungen erfasst und gespeichert werden.

Das Verzeichnungsmodell, das heißt die Koeffizienten, Vergrößerungen und ggf. weitere Werte werden in einer verkürzten Zoomtabelle gespeichert. Diese verkürzte Zoomtabelle umfasst vorzugsweise vier Zeilen und enthält Koeffizienten von Ausgleichspolynomen vorzugsweise dritten Grades, welche die Berechnung der genannten Werte zu beliebigen Vergrößerungen ermöglichen.

Die verkürzte Zoomtabelle kann durch Verwendung folgender Polynome für jede beliebige Vergrößerung β erweitert werden.:

Zu jeder Zoomposition i ist die Größe der Koeffizienten der Verzeichnung zu bestimmen. Zu jeder Zoomposition i gehört eine Vergrößerung β. Aus β ist deren Größe mit Hilfe der Einträge der verkürzten Zoomtabelle zu bestimmen.

Dabei gilt für die Verzeichnungskorrekturkoeffizienten a:

$$a_{m,n}\big(i(\beta)\big) = a_{m,n}(i^0 = 1) + a_{m,n}(i^0 = 2) * \beta + a_{m,n}(i^0 = 3) * \beta^2 + a_{m,n}(i^0 = 4) * \beta^3 ;$$

wobei m für die drei Farbkanäle Rot, Grün, Blau steht und n jeweils Werte von 1 bis 11 annimmt;
und für Bildstandskorrekturkoeffizienten I:

$$I_m\big(i(\beta)\big) = I_m(i^0 = 1) + I_m(i^0 = 2) * \beta + I_m(i^0 = 3) * \beta^2 + I_m(i^0 = 4) * \beta^3 ;$$

wobei m Koordinatenwerte X und Y annimmt, und
wobei $i^0=1...3$, die Werte der verkürzten Zoomtabelle sind.

Ix und Iy beschreiben die Abweichung eines Mittenobjektes gegen die bestimmte Bildmitte und dienen der Bildstandskorrektur.

Die Zoomtabelle kann fest berechnet und im Speicher des Systems hinterlegt sein, oder zur Laufzeit aus der verkürzten Zoomtabelle berechnet werden und hat dann vorzugsweise folgende Gestalt

| i | β | ... | ... | $a_{R,1}$ | $a_{R,2}$ | ... | $a_{R,11}$ | $a_{G,1}$ | $a_{G,2}$ | ... | $a_{G,11}$ | $a_{B,1}$ | $a_{B,2}$ | ... | $a_{B,11}$ | $I_x$ | $I_y$ |
|---|---|-----|-----|-----------|-----------|-----|------------|-----------|-----------|-----|------------|-----------|-----------|-----|------------|-------|-------|
| 1 | | | | | | | | | | | | | | | | | |
| 2 | | | | | | | | | | | | | | | | | |
| 3 | | | | | | | | | | | | | | | | | |
| ... | | | | | | | | | | | | | | | | | |

(fortgesetzt)

| i | β | ... | ... | $a_{R,1}$ | $a_{R,2}$ | ... | $a_{R,11}$ | $a_{G,1}$ | $a_{G,2}$ | ... | $a_{G,11}$ | $a_{B,1}$ | $a_{B,2}$ | ... | $a_{B,11}$ | $I_x$ | $I_y$ |
|---|---|-----|-----|-----------|-----------|-----|------------|-----------|-----------|-----|------------|-----------|-----------|-----|------------|-------|-------|
| N | | | | | | | | | | | | | | | | | |

Die Länge der Zoomtabelle richtet sich nach der Codierung des Antriebs, um von der größten zur kleinsten erreichbaren Vergrößerung zu gelangen. Bei Zoomsystemen mit mechanischem Fokusausgleich kann das die Schrittzahl des Antriebs oder eines Encoders sein. Bei Systemen mit Direktantrieb ist dies ein Eintrag in der Motorsteuertabelle.

Die Zoomtabelle hat dabei in einer bevorzugten Ausführungsform, um von β=5 bis β=0,5 mit Schrittgröße 0,001 zu gelangen, N=4501 Einträge. Damit ist für jede erdenklich mögliche Zoomposition eine qualitativ gute Bildkorrektur möglich.

Neben der Vergrößerung β und den Korrekturfaktoren a, I können beispielsweise auch Motorpositionen für jeden Vergrößerungswert in der Zoomtabelle hinterlegt sein.

Die Ermittlung des Verzeichniskorrekturmodells basiert auf: "The Worst Distortions of Astrometric Instruments and Orthonormal Models for Rectangular Fields of View", Valeri V. Makarov, Daniel R. Veillette, Gregory S. Hennessy, & Benjamin F. Lane; United States Naval Observatory, 3450 Massachusetts Ave. NW, Washington DC.

Die erfindungsgemäß erstellte Zoomtabelle kann nun während des Betriebes des Mikroskopes dazu genutzt werden, eine Verzeichniskorrektur und ggf. auch eine Bildstandskorrektur "on the fly" (während einer Zoomfahrt) vorzunehmen und die korrigierten Bilder dem Benutzer bereitzustellen, ohne dass eine aufwendige Software-Korrektur vorgenommen werden muss.

Das Verfahren ist mittels der Logikeinheit in die Hardware der Optical Engine integriert und liefert qualitativ erstklassige Bilder, sowohl im Live-Modus als auch im Standbild. Aufgrund der Hardware-Einbindung ist das Verfahren schnell genug, so dass der Benutzer im Live-Modus keinen Zeitversatz bemerkt.

In diesem Zusammenhang können die üblicherweise eingesetzten, dem Fachmann bekannten, Korrekturverfahren wie denoising (Rauschminderung), shadowcorrection (Korrektur des Randlichtabfalls), white balancing (Weißabgleich), color correction (Farbkorrektur), image stabilization (Bildstabilisierung) und anderes ebenfalls angewandt werden. Dies ist aber nicht zwingend erforderlich und wird daher nicht weiter beschrieben.

Vorteilhafterweise ist durch die Bildvstandskorrektur eine Zoomfahrt mit einem festen Bildzentrum gewährleistet. Wenn der Zoom nicht betätigt wird, ist die Bildstandskorrektur nicht erforderlich.

Durch die äußerst leistungsfähige Verzeichniskorrektur können unter Umständen im Digitalmikroskop einfachere Linsenbaugruppen verwendet werden, die einerseits preiswerter und andererseits deutlich lichtstärker sein können.

Ein weiterer Vorteil besteht darin, dass unabhängig von Produktionstoleranzen in jeder Zoomstufe die exakte Vergrößerung bestimmbar ist. Dies ist durch die Verwendung der verkürzten Zoomtabellen, welche im Gerät abgespeichert sind, auch bei einem Objektivwechsel ohne besonderen Aufwand möglich.

Nachfolgend wird eine mögliche Ausführungsform des erfindungsgemäßen Korrekturverfahrens näher erläutert.

Das erfindungsgemäße Korrekturverfahren wird auf jedes vom Bildsensor aufgenommene Bild angewendet. Die Korrektur muss dabei für Features wie Bildstabilisierung und Image-Rotation in einem größerem Bereich erfolgen, als der Benutzer angezeigt bekommt bzw. als Bild gespeichert wird. Das Verfahren ist äußerst schnell, wenn es hardwareimplementiert ist.

Der als User Displayed Region (UDR) bezeichnete Bereich beträgt in der bevorzugten Ausführungsform 1600 x 1200 Pixel. Der Korrekturbereich oder Distortion Correktion Region (DCR) umfasst einen Bereich von 1760 x 1320 Pixel. Dieser Bereich ist damit ca. 10% größer, als das endgültige Bild. Der DCR ist an einem Referenzpixel (RP) nahe der ermittelten Bildmitte. Das Referenzpixel ist nach Bestimmung der Bildmitte fest während des gesamten Verfahrens.

Für jede Pixelposition (x, y) des DCR wird die korrespondierende "korrigierte" Position ($x_d$, $y_d$) mit Hilfe des zuvor bestimmte und im Speicher der Logikeinheit hinterlegten Modells wie folgt berechnet.

$$x_{d,m} = a_{m,1} + a_{m,3} \cdot x_n + a_{m,5} \cdot y_n + a_{m,7} \cdot \left( x_n^2 - \frac{1}{3} \right) + a_{m,8} \cdot x_n y_n + a_{m,9} \cdot \left( x_n r^2 - \frac{14}{15} x_n \right)$$

$$+ a_{m,10} \cdot \left( \frac{5}{9} x_n^2 + y_n^2 - \frac{14}{27} \right) + a_{m,11} \cdot \left( -\frac{4}{9} x_n y_n \right)$$

$$y_{d,m} = a_{m,2} + a_{m,4} \cdot y_n + a_{m,6} \cdot x_n + a_{m,7} \cdot x_n y_n + a_{m,8} \cdot \left( y_n^2 - \frac{1}{3} \right) + a_{m,9} \cdot \left( y_n r^2 - \frac{14}{15} y_n \right)$$

$$+ a_{m,10} \cdot \left( -\frac{4}{9} x_n y_n \right) + a_{m,11} \cdot \left( x_n^2 + \frac{5}{9} y_n^2 - \frac{14}{27} \right)$$

wobei der Index m für die drei Farbkanalreferenzbilder Rot Grün, Blau verwendet wird und r der Radius ist, wobei

$$r = \sqrt{(x_n^2 + y_n^2)} \ .$$

Die Pixelkoordinaten sind dabei normalisierte Koordinaten, die im Bereich von -1 bis 1 definiert sind.

Der Bildwert an der berechneten korrigierten Position wird mittels eines vorzugsweise linearen Interpolationsmodells berechnet als Ergebnis der initialen Pixelposition(x, y). Dabei werden jeweils die benachbarten Pixel berücksichtigt.

Dieser Vorgang wird für alle drei Farbkanalreferenzbilder wiederholt, das Bild wieder durch Überlagern der Farbkanäle zusammengesetzt und auf die UDR beschnitten und angezeigt und/oder gespeichert.

Für den Fall, dass die korrigierte Position ($x_d$, $y_d$) außerhalb der DCR liegt, wird das Pixel auf NIL oder "schwarz" gesetzt.

Die Zentrumskoordinaten des beschnittenen Bildes sind abhängig vom statischen Referenzpixel, der Bildstandskorrektur und einen eventuell aktivierten Bildstabilisierungsalgorithmus, welcher ggf. beachtet werden muss.

## Patentansprüche

1.   Verfahren zur Kalibrierung eines digitalen optischen Abbildungssystems, welches zumindest ein motorisiertes oder kodiertes Zoomsystem und einen Bildsensor umfasst, folgende Schritte umfassend:

- Platzieren eines Referenzobjektes, wobei das Referenzobjekt ein Referenzmuster mit fest definierten Referenzpunkten aufweist, unter dem Abbildungssystem;
- Auswählen und Speichern einer Zoomstellung des Zoomsystems in einer Referenztabelle;
- Aufnahme eines Referenzbildes durch Abbilden des Referenzobjektes auf den Bildsensor;
- Teilen des Referenzbildes in mindestens drei Farbkanalreferenzbilder $R_R$ $R_G$ $R_B$;
- Einpassen eines dem Referenzmuster entsprechenden Idealbildes in das Referenzbild in Lage und Orientierung und Ermitteln eines Bildzentrums, indem das Idealbild so lange verschoben und gedreht wird bis die geringste Abweichung zwischen dem Idealbild und dem Referenzbild erzielt ist; anschließend
- Ermitteln eines Lagefehlervektors für n Referenzpunkte des Referenzobjektes in jedem der Farbkanalreferenzbilder, indem Lageabweichungen vom Idealbild in Höhe und Breite bestimmt werden;
- Speichern der ermittelten Lagefehlervektoren in der Referenztabelle;
- Wiederholen der vorgenannten Schritte für mindestens drei verschiedene Zoomstellungen.

2.   Verfahren nach Anspruch 1, **dadurch gekennzeichnet, dass** für jede Zoomstellung ein Realzoomwert $\beta$ ermittelt und in der Referenztabelle gespeichert wird.

3.   Verfahren nach Anspruch 1 oder 2, **dadurch gekennzeichnet, dass** aus der Referenztabelle eine Basis-Zoomtabelle für i Basis-Zoomstufen erstellt wird durch:

- Ermitteln von Verzeichnungskorrekturkoeffizienten $a_{m,n}$ aus den Lagefehlervektoren der Referenzpunkte, die die Deformation des Referenzmusters beschreiben, für jedes Farbkanalreferenzbild, wobei m=[R,G,B] und n=I...II;
- Ermitteln von Bildstandskorrekturkoeffizienten $I_X$, $I_Y$, die eine Abweichung des Bildstandes des Referenzmusters beschreiben.

4.   Verfahren nach dem auf Anspruch 2 rückbezogenen Anspruch 3, **dadurch gekennzeichnet, dass** aus der Basis-Zoomtabelle eine Zoomtabelle erstellt wird, indem die Verzeichniskorrekturkoeffizienten $a_{m,n}$ nach folgender Vorschrift ermittelt werden:

$$a_{m,n}\big(i(\beta)\big) = a_{m,n}(i^0 = 1) + a_{m,n}(i^0 = 2) * \beta + a_{m,n}(i^0 = 3) * \beta^2 + a_{m,n}(i^0 = 4) * \beta^3.$$

5. Verfahren nach dem auf Anspruch 2 rückbezogenen Anspruch 3, **dadurch gekennzeichnet, dass** aus der Basis-Zoomtabelle eine Zoomtabelle erstellt wird, indem die Bildstandskorrekturkoeffizienten I nach folgender Vorschrift ermittelt werden:

$$I_m\big(i(\beta)\big) = I_m(i^0 = 1) + I_m(i^0 = 2) * \beta + I_m(i^0 = 3) * \beta^2 + I_m(i^0 = 4) * \beta^3.$$

6. Verfahren zur Korrektur von Abbildungsfehlern in einem digitalen optischen Abbildungssystem, welches zumindest ein motorisiertes oder kodiertes Zoomsystem und einen Bildsensor umfasst, wobei im Abbildungssystem eine Zoomtabelle abgespeichert ist, die nach einem Verfahren gemäß einem der Ansprüche 3-5 ermittelt wurde, welche für vorbestimmte Zoomstufen Verzeichnungskorrekturkoeffizienten umfasst, folgende Schritte umfassend:

   - Erfassen eines Objektbildes;
   - Zwischenspeichern des Objektbildes;
   - Erfassen einer Zoomstellung des Zoomsystems;
   - Ermitteln der Verzeichnungskorrekturkoeffizienten für die Zoomstellung aus der Zoomtabelle;
   - pixelweise Korrektur des Objektbildes unter Verwendung der Verzeichnungskorrekturkoeffizienten ;
   - Ausgabe eines korrigierten Objektbildes.

7. Verfahren nach Anspruch 6, weiterhin den Schritt Ermitteln von Bildstandskorrekturkoeffizienten für die Zoomstellung umfassend, wobei die pixelweise Korrektur des Objektbildes auch unter Verwendung der Bildstandskorrekturkoeffizienten erfolgt.

8. Verfahren nach Anspruch 6 oder 7, **dadurch gekennzeichnet, dass** eine Korrekturregion des Objektbildes ausgewählt wird, welche kleiner als eine Sensorfläche des Bildsensors ist.

9. Verfahren nach einem der Ansprüche 6 bis 8, **dadurch gekennzeichnet dass** die pixelweise Korrektur unter Verwendung folgender Beziehung erfolgt:

$$x_{dist,m} = a_{m,1} + a_{m,3} \cdot x + a_{m,5} \cdot y + a_{m,7} \cdot \left(x^2 - \frac{1}{3}\right) + a_{m,8} \cdot xy + a_{m,9} \cdot \left(xr^2 - \frac{14}{15}x\right) + a_{m,10} \cdot \left(\frac{5}{9}x^2 + y^2 - \frac{14}{27}\right) + a_{m,11} \cdot \left(-\frac{4}{9}xy\right)$$

$$y_{dist,m} = a_{m,2} + a_{m,4} \cdot y + a_{m,6} \cdot x + a_{m,7} \cdot xy + a_{m,8} \cdot \left(y^2 - \frac{1}{3}\right) + a_{m,9} \cdot \left(yr^2 - \frac{14}{15}y\right) + a_{m,10} \cdot \left(-\frac{4}{9}xy\right) + a_{m,11} \cdot \left(x^2 + \frac{5}{9}y^2 - \frac{14}{27}\right)$$

wobei m=[Rot, Grün, Blau] und $r = \sqrt{(x_n^2 + y_n^2)}$ .

10. Verfahren nach einem der Ansprüche 6 bis 9, **dadurch gekennzeichnet, dass** die pixelweise Korrektur eine Interpolation der Pixeldaten umfasst.

11. Verfahren nach einem der Ansprüche 6 bis 10, **dadurch gekennzeichnet, dass** eine Ermittlung und Ausgabe und/oder Speicherung einer realen Vergrößerung nach Korrektur erfolgt.

12. Digitales optisches Abbildungssystem mit einem Zoomsystem, einem Bildaufnahmesensor, sowie einer Logikeinheit zur digitalen Bildverarbeitung, wobei die Logikeinheit in die Hardware des Abbildungssystems integriert und ausgebildet ist, ein Verfahren nach einem der Ansprüche 6 bis 11 auszuführen.

13. Abbildungssystem nach Anspruch 12, **dadurch gekennzeichnet, dass** es ein Digitalmikroskop ist, welches ein Objektiv umfasst, wobei im Objektiv und im Zoomsystem reduzierte Zoomtabellen gespeichert sind, welche von der Logikeinheit in einem Kalibrierverfahren und/oder in einem Korrekturverfahren ausgelesen werden.

**Claims**

1.  Method for calibrating a digital optical imaging system, which comprises at least one motor-driven or encoded zoom system and an image sensor, comprising the following steps:

    - placing a reference object under the imaging system, the reference object having a reference pattern with fixedly defined reference points;
    - selecting and storing a zoom setting of the zoom system in a reference table;
    - recording a reference image by imaging the reference object on the image sensor;
    - dividing the reference image into at least three colour channel reference images $R_R$, $R_G$, $R_B$;
    - fitting an ideal image corresponding to the reference pattern into the reference image in terms of relative position and orientation and ascertaining an image centre by virtue of displacing and rotating the ideal image until the smallest deviation is obtained between the ideal image and the reference image; subsequently
    - ascertaining a relative position error vector for n reference points of the reference object in each of the colour channel reference images by virtue of determining relative position deviations from the ideal image in terms of height and width;
    - storing the ascertained relative position error vectors in the reference table;
    - repeating the aforementioned steps for at least three different zoom settings.

2.  Method according to Claim 1, **characterized in that** a real zoom value $\beta$ is ascertained and stored in the reference table for each zoom setting.

3.  Method according to Claim 1 or Claim 2, **characterized in that** a base zoom table is created for i base zoom levels from the reference table by virtue of:

    - ascertaining distortion correction coefficients $a_{m,n}$ from the relative position error vectors of the reference points, which distortion correction coefficients describe the deformation of the reference pattern, for each colour channel reference image, where m = [R, G, B] and n = 1,..., 11;
    - ascertaining image steadiness correction coefficients $I_X$, $I_Y$, which describe the image steadiness deviation of the reference pattern.

4.  Method according to Claim 3 as referred to Claim 2, **characterized in that** a zoom table is created from the base zoom table by virtue of the distortion correction coefficients $a_{m,n}$ being ascertained according to the following prescription:

$$a_{m,n}\big(i(\beta)\big) = a_{m,n}(i^0 = 1) + a_{m,n}(i^0 = 2) * \beta + a_{m,n}(i^0 = 3) * \beta^2 + a_{m,n}(i^0 = 4) * \beta^3 .$$

5.  Method according to Claim 3 as referred to Claim 2, **characterized in that** a zoom table is created from the base zoom table by virtue of the image steadiness correction coefficients I being ascertained according to the following prescription:

$$I_m\big(i(\beta)\big) = I_m(i^0 = 1) + I_m(i^0 = 2) * \beta + I_m(i^0 = 3) * \beta^2 + I_m(i^0 = 4) * \beta^3 .$$

6.  Method for correcting imaging aberrations in a digital optical imaging system comprising at least one motorized or encoded zoom system and an image sensor, wherein a zoom table is stored in the imaging system, the zoom table having been ascertained according to a method according to any one of Claims 3-5, said zoom table comprising distortion correction coefficients for predetermined zoom levels, the method including the following steps:

    - capturing an object image;
    - buffer storing the object image;
    - capturing a zoom setting of the zoom system;
    - ascertaining the distortion correction coefficients for the zoom setting from the zoom table;
    - correcting the object image pixel-by-pixel using the distortion correction coefficients;
    - outputting a corrected object image.

7. Method according to Claim 6, furthermore including the step of ascertaining image steadiness correction coefficients for the zoom setting, with the pixel-by-pixel correction of the object image being implemented using the image steadiness correction coefficients as well.

8. Method according to Claim 6 and 7, **characterized in that** a correction region of the object image is selected, said correction region being smaller than a sensor area of the image sensor.

9. Method according to any one of Claims 6 to 8, **characterized in that** the pixel-by-pixel correction is implemented using the following relationship:

$$x_{dist,m} = a_{m,1} + a_{m,3} \cdot x + a_{m,5} \cdot y + a_{m,7} \cdot \left(x^2 - \frac{1}{3}\right) + a_{m,8} \cdot xy + a_{m,9} \cdot \left(xr^2 - \frac{14}{15}x\right) + a_{m,10}\left(\frac{5}{9}x^2 + y^2 - \frac{14}{27}\right) + a_{m,11}\left(-\frac{4}{9}xy\right)$$

$$y_{dist,m} = a_{m,2} + a_{m,4} \cdot y + a_{m,6} \cdot x + a_{m,7} \cdot xy + a_{m,8}\left(y^2 - \frac{1}{3}\right) + a_{m,9}\left(yr^2 - \frac{14}{15}y\right) + a_{m,10}\left(-\frac{4}{9}xy\right) + a_{m,11}\left(x^2 + \frac{5}{9}y^2 - \frac{14}{27}\right)$$

where m = [red, green, blue] and $r = \sqrt{x_n^2 + y_n^2}$.

10. Method according to any one of Claims 6 to 9, **characterized in that** the pixel-by-pixel correction includes an interpolation of the pixel data.

11. Method according to any one of Claims 6 to 10, **characterized in that** an ascertainment and output and/or storage of a real magnification is implemented following the correction.

12. Digital optical imaging system with a zoom system, an image recording sensor and a logic unit for digital image processing, wherein the logic unit is integrated in the hardware of the imaging system and is embodied to carry out a method according to any one of Claims 6 to 11.

13. Imaging system according to Claim 12, **characterized in that** this is a digital microscope comprising an objective, wherein reduced zoom tables are stored in the objective and in the zoom system, which zoom tables are read by the logic unit during a calibration method and/or a correction method.

**Revendications**

1. Procédé de calibrage d'un système de formation d'image optique numérique comprenant au moins un système de zoom motorisé ou codé et un capteur d'image, comprenant les étapes suivantes consistant à :

   - placer un objet de référence sous le système de formation d'image, l'objet de référence étant un motif de référence ayant des points de référence définis de manière fixe ;
   - sélectionner et stocker une position de zoom du système de zoom dans une table de référence ;
   - enregistrer une image de référence en formant une image de l'objet de référence sur le capteur d'image ;
   - diviser l'image de référence en au moins trois images de référence de canal de couleur $R_R$ $R_G$ $R_B$ ;
   - ajuster une image idéale correspondant au motif de référence dans l'image de référence en position et en orientation et déterminer un centre de l'image en déplaçant et tournant l'image idéale jusqu'à atteindre un écart minimal entre l'image idéale et l'image de référence ;
   ensuite,
   - déterminer un vecteur d'erreur de position pour n points de référence de l'objet de référence sur chacune des images de référence de canal de couleur en déterminant des écarts de position en hauteur et en largeur par rapport à l'image idéale ;
   - stocker les vecteurs d'erreur de position déterminés dans la table de référence ;
   - répéter les étapes ci-dessus pour les au moins trois positions de zoom différentes.

2. Procédé selon la revendication 1, **caractérisé en ce que** pour chaque position de zoom, une valeur de zoom réelle β est déterminée et stockée dans la table de référence.

3. Procédé selon la revendication 1 ou 2, **caractérisé en ce qu'**une table de zoom de base pour i niveaux de zoom de base est créée à partir de la table de référence par les étapes consistant à :

- déterminer des coefficients de correction de distorsion $a_{m,n}$ à partir des vecteurs d'erreur de position des points de référence qui décrivent la déformation du motif de référence, pour chaque image de référence de canal de couleur, où m = [R,G,B] et n = 1 ...11 ;
- déterminer des coefficients de correction de stabilité d'image $I_X$, $I_Y$ qui décrivent un écart de la stabilité d'image du motif de référence.

4. Procédé selon la revendication 3 visé à revendication 2, **caractérisé en ce qu'**une table de zoom est créée à partir de la table de zoom de base en déterminant les coefficients de correction de distorsion $a_{m,n}$ selon la règle suivante :

```
a_m,n (i (β) ) = a_m,n (i⁰ = 1) + a_m,n (i⁰ = 2) * β + a_m,n . (i⁰
  = 3) * β² + a_m,n (i⁰ = 4) * β³.
```

5. Procédé selon la revendication 3 visé à revendication 2, **caractérisé en ce qu'**une table de zoom est créée à partir de la table de zoom de base **en ce que** les coefficients de correction de stabilité d'image I sont déterminés selon la règle suivante :

```
I_m (i (β) ) = I_m (i⁰ = 1) + I_m (i⁰ = 2) * β + I_m (i⁰ = 3) *
  β² + I_m (i⁰ = 4) * β³.
```

6. Procédé de correction d'erreurs de formation d'image dans un système de formation d'image optique numérique qui comprend au moins un système de zoom motorisé ou codé et un capteur d'image, dans lequel une table de zoom est stockée dans le système de formation d'image, laquelle a été déterminée selon un procédé selon l'une quelconque des revendications 3 à 5 et comprend des coefficients de correction de distorsion pour des niveaux de zoom prédéterminés, comprenant les étapes suivantes consistant à :

- acquérir une image d'objet ;
- mettre l'image d'objet en mémoire tampon ;
- acquérir une position de zoom du système de zoom ;
- déterminer les coefficients de correction de distorsion pour la position de zoom à partir de la table de zoom ;
- corriger pixel par pixel l'image d'objet en utilisant les coefficients de correction de distorsion ;
- sortir une image d'objet corrigée.

7. Procédé selon la revendication 6, comprenant en outre l'étape de détermination de coefficients de correction de stabilité d'image pour la position de zoom, la correction pixel par pixel de l'image d'objet étant réalisée également en utilisant les coefficients de correction de stabilité d'image.

8. Procédé selon la revendication 6 ou 7, **caractérisé en ce qu'**une région de correction de l'image d'objet est sélectionnée qui est plus petite qu'une surface de capteur du capteur d'image.

9. Procédé selon l'une quelconque des revendications 6 à 8, **caractérisé en ce que** la correction pixel par pixel est effectuée en utilisant la relation suivante

$$x_{dist,m} = a_{m,1} + a_{m,3} \cdot x + a_{m,5} \cdot y + a_{m,7} \cdot \left(x^2 - \frac{1}{3}\right) + a_{m,8} \cdot xy + a_{m,9}$$
$$\cdot \left(xr^2 - \frac{14}{15}x\right) + a_{m,10} \cdot \left(\frac{5}{9}x^2 + y^2 - \frac{14}{27}\right) + a_{m,11} \cdot \left(-\frac{4}{9}xy\right)$$

$$y_{dist,m} = a_{m,2} + a_{m,4} \cdot y + a_{m,6} \cdot x + a_{m,7} \cdot xy + a_{m,8} \cdot \left(y^2 - \frac{1}{3}\right) + a_{m,9}$$
$$\cdot \left(yr^2 - \frac{14}{15}y\right) + a_{m,10} \cdot \left(-\frac{4}{9}xy\right) + a_{m,11} \cdot \left(x^2 + \frac{5}{9}y^2 - \frac{14}{27}\right)$$

où m = [rouge, vert, bleu] et $r = \sqrt{(x_n^2 + y_n^2)}$.

**10.** Procédé selon l'une quelconque des revendications 6 à 9, **caractérisé en ce que** la correction pixel par pixel comprend une interpolation des données de pixel.

**11.** Procédé selon l'une quelconque des revendications 6 à 10, **caractérisé en ce qu'**une détermination et une sortie et/ou un stockage d'un agrandissement réel après correction sont effectués.

**12.** Système de formation d'image optique numérique comprenant un système de zoom, un capteur d'enregistrement d'image, ainsi qu'une unité logique pour le traitement d'image numérique, l'unité logique étant intégrée dans le matériel du système de formation d'image et réalisée pour effectuer un procédé selon l'une quelconque des revendications 6 à 11.

**13.** Système de formation d'image selon la revendication 12, **caractérisé en ce qu'**il s'agit d'un microscope numérique qui comprend un objectif, des tables de zoom réduites étant stockées dans l'objectif et dans le système de zoom qui sont lues par l'unité logique lors d'un procédé de calibrage et/ou d'un procédé de correction.

**IN DER BESCHREIBUNG AUFGEFÜHRTE DOKUMENTE**

**In der Beschreibung aufgeführte Patentdokumente**

- DE 10225193 A1
- DE 10114757 B4
- DE 102010025888 A1
- US 20080239107 A1
- US 20090268078 A1
- US 20040218071 A1